(19) Europäisches Patentamt
European Patent Office
Office européen des brevets

(11) EP 0 542 598 B1

(12) **FASCICULE DE BREVET EUROPEEN**

(45) Date de publication et mention de la délivrance du brevet: **07.02.1996 Bulletin 1996/06**

(51) Int Cl.$^6$: **C08F 220/24**, C08F 220/36, C08F 220/38, C08F 218/08, D21H 19/58

(21) Numéro de dépôt: **92402967.1**

(22) Date de dépôt: **03.11.1992**

(54) **Copolymères fluorés et leur utilisation pour le revêtement et l'imprégnation de substrats divers**

Fluorierte Copolymere und ihre Verwendung zur Beschichtung und Imprägnierung beliebiger Substrate

Fluorinated copolymers and their use for coating and impregnation of various substrates

(84) Etats contractants désignés:
**AT BE CH DE DK ES FR GB GR IE IT LI LU NL PT SE**

(30) Priorité: **12.11.1991 FR 9113867**

(43) Date de publication de la demande: **19.05.1993 Bulletin 1993/20**

(73) Titulaire: **ELF ATOCHEM S.A.**
**F-92800 Puteaux (FR)**

(72) Inventeurs:
- **Lina, Marie-José**
  **F-69005 Lyon (FR)**
- **Collette, Christian**
  **F-75005 Paris (FR)**
- **Corpart, Jean-Marc**
  **F-60180 Nogent-sur-Oise (FR)**
- **Dessaint, André**
  **F-60600 Clermont (FR)**

(74) Mandataire: **Hirsch, Marc-Roger et al**
**F-75008 Paris (FR)**

(56) Documents cités:
**EP-A- 0 034 527**
**EP-A- 0 195 714**
**EP-A- 0 408 917**
**CH-A- 471 768**
**US-A- 2 138 763**

Remarques:
Le dossier contient des informations techniques présentées postérieurement au dépôt de la demande et ne figurant pas dans le présent fascicule.

EP 0 542 598 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1)Convention sur le brevet européen).

Printed by Jouve, 75001 PARIS (FR)

## Description

La présente invention a pour objet des copolymères fluorés et leur utilisation pour le revêtement et l'imprégnation de substrats divers tels que textiles, cuirs, bois, non-tissés, métaux, béton, et, plus particulièrement, papiers et articles similaires pour les rendre oléophobes et hydrophobes.

Pour obtenir ces propriétés, de nombreux dérivés fluorés ont déjà été proposés. Cependant, si ces dérivés présentent de bonnes propriétés sur textiles et sur cuir, il est nécessaire pour obtenir ces mêmes propriétés sur papiers et articles similaires de les mettre en oeuvre à des doses trop importantes de matière active (en l'occurrence à un taux de fluor lié au carbone trop élevé) pour obtenir des performances économiquement acceptables.

Comme produits plus spécialement adaptés aux papiers, il a été proposé dans les brevets français 1 172 664 et 2 022 351 et dans le brevet U.S. 3 907 576 des complexes de chrome. Ces complexes qui confèrent effectivement aux papiers et articles similaires des propriétés oléophobes intéressantes, présentent cependant l'inconvénient d'être colorés en vert et de communiquer cette couleur aux substrats sur lesquels ils sont appliqués, limitant ainsi leur emploi.

Ont été également proposés pour des utilisations papetières, des phosphates de polyfluoroalkyle ou cycloalkyle (brevets français 1 305 612, 1 317 427, 1 388 621, 2 055 551, 2 057 793 et 2 374 327, brevets U.S. 3 083 224 et 3 817 958, brevet allemand 2 405 042) et des phosphates de polyfluoroalkyle hydroxypropyle (brevet U.S. 3 919 361). Cependant, ces produits qui confèrent aux papiers de bonnes propriétés oléophobes ont par contre le grave défaut de ne leur conférer aucune propriété hydrophobe. De ce fait, les papiers traités avec ces produits, n'offrent aucune protection vis-à-vis des produits aqueux. De plus, ces produits n'ont aucun pouvoir de collage et diminuent même fortement l'efficacité des agents de collage, gênant ainsi l'aptitude à l'écriture et à l'impression.

De plus l'évolution des techniques culinaires par le développement du four à micro-ondes nécessite la mise au point de matériaux nouveaux pour l'emballage alimentaire. En effet, l'emploi de barquettes aluminium est prohibé; les matériaux plastiques résistent mal à la chaleur; de plus, ils nécessitent l'emploi de quantités importantes de produits pétroliers et leur destruction ou leur recyclage pose de gros problèmes. Le matériau de choix serait donc le carton s'il était possible de lui apporter d'excellentes propriétés hydrophobes et oléophobes.

Ont été proposés pour le traitement des papiers et articles similaires, des copolymères acryliques et méthacryliques perfluoroaliphatiques avec des esters acryliques ou méthacryliques cationiques de dialkylaminoalkyle protonés, quaternisés ou N-oxydés. Cependant, les compositions revendiquées présentent l'inconvénient de présenter des propriétés hydrophobes et/ou oléophobes insuffisantes (US 4 147 851; EP 0109.171) ou d'impliquer la présence d'un comonomère qui est apparemment suspect de donner lieu à une toxicité à long terme (BF 2 476 097).

La présente invention porte sur des produits fluorés, parfaitement diluables à l'eau, applicables sur papier selon différentes techniques (en size-press, ou dans la masse) et qui confèrent au papier, sans nécessité d'adjuvants (séquestrants, agents de rétention, résines de fixation...), d'excellentes propriétés hydrophobes et oléophobes, tout en conférant aux papiers ainsi traités, malgré les faibles doses de fluor déposé, une résistance spectaculaire aux liquides d'origine aqueuse, aux corps gras ainsi qu'aux solvants de basse tension superficielle.

Les compositions revendiquées sont également très efficaces pour protéger différents supports tels que cuir, non-tissé, matériaux de construction.

Les produits selon la présente invention sont des copolymères fluorés, éventuellement salifiés ou quaternisés, qui comprennent en poids:

(a) 92 à 50%, de préférence 90 à 70%, d'un ou plusieurs monomères polyfluorés de formule générale:

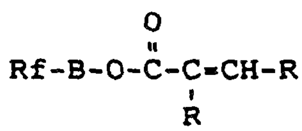

(I)

dans laquelle:

- Rf représente un radical perfluoré à chaîne droite ou ramifiée, contenant 2 à 20 atomes de carbone, de préférence 4 à 16 atomes de carbone;
- B représente un enchaînement bivalent lié à O par un atome de carbone et pouvant comporter un ou plusieurs atomes d'oxygène, de soufre et/ou d'azote, l'un des symboles R représentant un atome d'hydrogène et l'autre un atome d'hydrogène ou un radical alkyle contenant 1 à 4 atomes de carbone;

(b) 1 à 25%, de préférence 8 à 18%, d'un ou plusieurs monomères de formule générale:

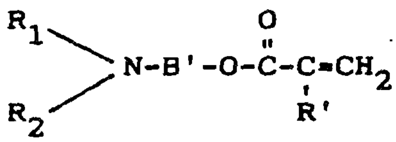

(II)

dans laquelle:

B' représente un radical alkylène linéaire ou ramifié, contenant 1 à 4 atomes de carbone,

R' représente un atome d'hydrogène ou un radical alkyle contenant 1 à 4 atomes de carbone;

$R_1$ et $R_2$, identiques ou différents, représentent chacun un atome d'hydrogène ou un radical alkyle linéaire ou ramifié, contenant 1 à 18 atomes de carbone, hydroxyéthyle ou benzyle ou $R_1$ et $R_2$ ensemble avec l'atome d'azote auquel ils sont liés forment un radical morpholino, pipéridino ou pyrrolidinyle-1;

(c) 1 à 25%, de préférence de 2 à 10%, d'un dérivé vinylique de formule générale:

$$R''\text{-}CH{=}CH_2 \qquad \text{(III)}$$

dans laquelle:

R" peut être un groupement alkylcarboxylate ou alkyléther contenant de 1 à 18 atomes de carbone;

(d) 0 à 10%, de préférence 0 à 8%, d'un monomère quelconque autre que les monomères de formules I, II, III, à l'exclusion du monomère

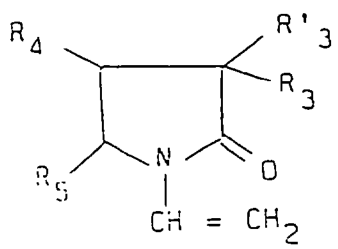

dans laquelle $R_3$, $R'_3$, $R_4$ et $R_5$ sont identiques ou différents et représentent chacun un atome d'hydrogène ou un radical alkyle contenant 1 à 4 atomes de carbone.

Les monomères fluorés de formule (I) peuvent être préparés selon des procédés connus, par exemple par estérification des alcools polyfluorés correspondants de formule:

$$R_f\text{-}B\text{-}OH \qquad \text{(IV)}$$

au moyen d'un acide alcène monocarboxylique de formule:

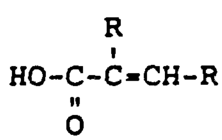

(V)

tel que, par exemple, l'acide acrylique, l'acide méthacrylique ou l'acide crotonique, en présence d'un catalyseur comme l'acide sulfurique ou l'acide p-toluènesulfonique. Au lieu des acides de formule (V), on peut également utiliser leurs esters, anhydrides ou halogénures. Comme exemples d'alcools polyfluorés de formule (IV), on peut citer plus particulièrement ceux de formules (VI-1) à (VI-10) ci-dessous:

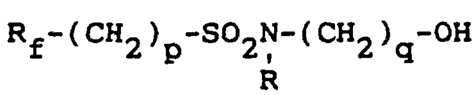

(VI-1)

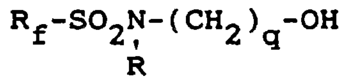

(VI-2)

$$R_f\text{-}(CH_2)_p\text{-}OH \qquad (VI\text{-}3)$$

$$R_f\text{-}(CH_2)_p\text{-}O\text{-}(CH_2)_q\text{-}OH \qquad (VI\text{-}4)$$

$$R_f\text{-}(CH_2)_p\text{-}S\text{-}(CH_2)_q\text{-}OH \qquad (VI\text{-}5)$$

$$R_f\text{-}(CH_2)_p\text{-}(OCH_2CH_2)_q\text{-}OH \qquad (VI\text{-}6)$$

$$R_f\text{-}(CH_2)_p\text{-}SO_2\text{-}(CH_2)_q\text{-}OH \qquad (VI\text{-}7)$$

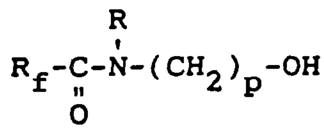

(VI-8)

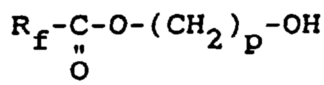

(VI-9)

$$R_f\text{-}CH{=}CH\text{-}(CH_2)_p\text{-}OH \qquad (VI\text{-}10)$$

dans lesquelles $R_f$ et R ont les mêmes significations que ci-dessus, les symboles p et q, identiques ou différents, représentent chacun un nombre entier allant de 1 à 20 et, de préférence, égal de 2 à 4.

Pour des raisons économiques et pratiques, il est particulièrement intéressant d'utiliser un mélange de composés représentant des radicaux $R_f$ différents.

Comme exemples de monomères de formule (II), on peut citer plus particulièrement les acrylates et méthacrylates des amino-alcools suivants: diméthylamino-2-éthanol, diéthylamino-2-éthanol, dipropylamino-2-éthanol, di-isobutylamino-2-éthanol, N-tertiobutylamino-2-éthanol, N-tert-butyl-N-méthylamino-2-éthanol, morpholino-2-éthanol, N-méthyl-N-dodécylamino-2-éthanol, N-éthyl-N-octadécylamino-2-éthanol, N-éthyl-N-(éthyl-2-hexyl)amino-2-éthanol, pipéridino-2-éthanol, (pyrrolidinyl-1)-2-éthanol, diéthylamino-3-propanol-1, diéthylamino-2-propanol-1, diméthylamino-1-propanol-2, diéthylamino-4-butanol-1, di-isobutylamino-4-butanol-1, diméthylamino-1-butanol-2, diéthylamino-4-butanol-2. Ces esters peuvent être préparés par exemple suivant la méthode décrite dans le brevet U.S. 2 138 763. Le monomère de formule (II) préféré est le méthacrylate de diméthylaminoéthyle ou le méthacrylate de N-tertiobutylaminoéthyle.

Comme monomères vinyliques de formule (III) utilisables dans le cadre de la présente invention, on peut citer:

- les esters vinyliques tels que l'acétate de vinyle, le propionate de vinyle, les esters vinyliques des acides connus sur le marché sous le nom de "Versatic acids", l'isobutyrate de vinyle, le sénécioate de vinyle, l'isodécanoate de vinyle, le stéarate de vinyle;
- les éthers alkyl-vinyliques, halogénés ou non, tels que le cétylvinyléther, le dodécylvinyléther, l'isobutylvinyléther, l'éthylvinyléther, le chloro-2-éthylvinyléther.

  Le monomère de formule (III) préféré est l'acétate de vinyle.

Comme exemples de comonomères (d) pouvant être utilisés dans le cadre de la présente invention, on peut citer:

- les hydrocarbures oléfiniques inférieurs, halogénés ou non, tels que l'éthylène, le propylène, l'isobutène, le chloro-3-isobutène-1, le butadiène, l'isoprène, les chloro- et dichloro-butadiènes, les fluoro- et difluoro-butadiènes, le diméthyl-2,5-hexadiène-1,5, le diisobutylène;
- les halogénures de vinyle, d'allyle ou de vinylidène tels que le chlorure de vinyle ou de vinylidène, le fluorure de vinyle ou de vinylidène, le bromure d'allyle, le chlorure de méthallyle;
- le styrène et ses dérivés, tels que le vinyl-toluène, l'α-méthyl-styrène, l'α-cyanométhyl-styrène, le divinylbenzène,

le N-vinylcarbazole;

- les alkylvinylcétones comme la méthylvinylcétone;
- les acides insaturés, tels que les acides acrylique, méthacrylique, α-chloro-acrylique, crotonique, maléique, fumarique, itaconique, citraconique et sénécioïque, leurs anhydrides et leurs esters comme les acrylates et méthacrylates d'allyle, de méthyle, de butyle, d'isobutyle, d'hexyle, d'heptyle, d'éthyl-2-hexyle, de cyclohexyle, de lauryle, de stéaryle ou de cellosolve, le maléate de diméthyle, le crotonate d'éthyle, de maléate acide de méthyle, l'itaconate acide de butyle, les diacrylates et diméthacrylates de glycol ou de polyalkylèneglycol;
- les esters insaturés de formule:

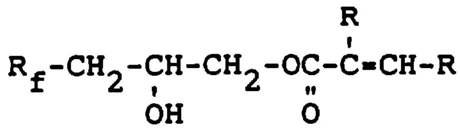

(VII)

obtenus par condensation d'un époxyde fluoré:

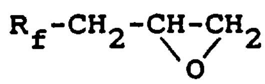

(VIII)

sur un acide alcène monocarboxylique de formule (V); et

- les chlorures de formule (IX):

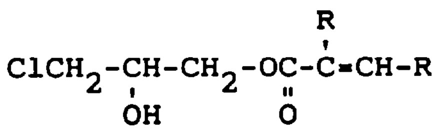

(IX)

obtenus par addition de l'épichlorhydrine sur un acide de formule (V);

- les acrylates et méthacrylates d'éthers de mono- et poly-éthylèneglycols ou -propylèneglycols de formule:

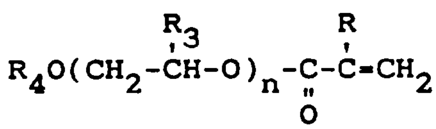

(X)

dans laquelle $R_3$ représente un atome d'hydrogène ou un radical méthyle; $R_4$ représente un radical alkyle et n est un nombre entier compris entre 1 et 10;

- l'acrylonitrile, le méthacrylonitrile, le chloro-2-acrylonitrile, l'acrylate de cyano-2-éthyle, le méthylène glutaronitrile, le cyanure de vinylidène, les cyanoacrylates d'alkyle comme le cyanoacrylate d'isopropyle, la trisacryloyl-hexahydro-s-triazine, le vinyltrichlorosilane, le vinyltriméthoxysilane, le vinyltriéthoxysilane;
- l'alcool allylique, l'allylglycolate, l'isobutènediol, l'allyloxy-éthanol, l'o-allylphénol, le divinylcarbinol, le glycérol-allyléther, l'acrylamide, le méthacrylamide, les maléamide et maléimide, le N-(cyano-éthyl)-acrylamide, le N-isopropyl-acrylamide, le diacétoneacrylamide, les N-(hydroxyméthyl)-acrylamide et méthacrylamide, les N-(alcoxyméthyl) -acrylamides et méthacrylamides, le glyoxal-bis-acrylamide, l'acrylate ou méthacrylate de sodium, l'acrylate de sulfo-2-éthyle, les acides vinyl-sulfonique et styrène-p-sulfonique et leurs sels alcalins, l'amino-3-crotononitrile, la monoallylamine, les vinylpyridines, l'acrylate ou méthacrylate de glycidyle, l'allylglycidyléther, l'acroléine;
- les esters d'allyle comme l'acétate d'allyle et l'heptanoate d'allyle.

Les produits selon l'invention sont préparés de façon connue en soi par copolymérisation des monomères en solution dans un solvant inerte ou dans un mélange de solvants inertes tels que les cétones (par exemple, l'acétone, la méthyléthylcétone, la méthylisobutylcétone); des alcools (par exemple l'isopropanol), des esters (par exemple l'acétate d'éthyle ou l'acétate de butyle), des éthers (par exemple le diisopropyléther, l'éther éthylique ou méthylique de l'éthylène- ou du propylène-glycol, le tétrahydrofuranne, le dioxanne), des hydrocarbures aliphatiques ou aromatiques, des hydrocarbures halogénés (par exemple le perchloréthylène, le trichloro--1,1,1-éthane, le trichlorotrifluoroéthane), le diméthylformamide, la N-méthyl-pyrrolidone-2, la butyrolactone, le DMSO, les éthers de glycol et dérivés. On utilise de préférence les solvants miscibles à l'eau.

Plus particulièrement la N-méthylpyrrolidone-2 (N.M.P.) ou des mélanges binaires NMP/acétone sont utilisés comme solvant de polymérisation. L'utilisation de ces solvants conduit à des solutions, parfaitement limpides et stables, dont les propriétés applicatives (sur papier notamment) sont améliorées de façon spectaculaire comparativement aux produits synthétisés dans l'isopropanol et/ou ses mélanges binaires ou ternaires. La concentration totale des monomères peut varier de 5 à 60% en poids.

On effectue la polymérisation en présence d'initiateur(s) qu'on utilise à raison de 0,1 à 1,5% par rapport au poids total des monomères engagés. Comme initiateurs, on peut utiliser des peroxydes tels que, par exemple, le peroxyde de benzoyle, le peroxyde de lauroyle, le peroxyde de succinyle et le perpivalate de tertiobutyle, ou des composés azoïques tels que, par exemple, l'azo-2,2'-bis-isobutyronitrile, l'azo-4,4'-bis-(cyano-4-pentanoïque) et l'azodicarbonamide. On peut également opérer en présence de rayonnements U.V. et de photo-initiateurs tels que la benzophénone, la méthyl-2-anthraquinone ou le chloro-2-thioxanthone. La longueur des chaînes polymériques peut, si on le désire, être réglée à l'aide d'agents de transfert de chaînes tels que les alkylmercaptans, le tétrachlorure de carbone ou le triphénylméthane, utilisés à raison de 0,05 à 1% par rapport au poids total de monomères.

La température de réaction peut varier dans de larges limites, c'est-à-dire entre la température ambiante et le point d'ébullition du mélange de réaction. Préférentiellement, on opère entre 60 et 90°C.

La salification éventuelle du copolymère peut se faire à l'aide d'acides minéraux ou organiques forts ou moyennement forts, c'est-à-dire d'acides dont la constante de dissociation ou la première constante de dissociation est supérieure à $10^{-5}$. On peut citer, par exemple, les acides chlorhydrique, bromhydrique, sulfurique, nitrique, phosphorique, acétique, formique, propionique ou lactique. Préférentiellement, on utilise l'acide acétique.

Au lieu de convertir le copolymère en sel, on peut le quaterniser à l'aide d'un agent quaternisant approprié tel que, par exemple, l'iodure de méthyle, l'iodure d'éthyle, le sulfate de diméthyle, le sulfate de diéthyle, le chlorure de benzyle, le phosphate de triméthyle, le p-toluènesulfonate de méthyle.

La solution du copolymère obtenu peut éventuellement être diluée avec le solvant de polymérisation ou avec un autre solvant ou avec un mélange d'un solvant et d'eau. Par souci écologique, on préfèrera la dilution par l'eau. Si on le désire, on peut également isoler le copolymère par élimination du ou des solvants.

Comme substrats susceptibles d'être rendus oléophobes et hydrophobes avec les produits selon l'invention, on peut citer principalement les papiers, les cartons et les matériaux assimilés. On peut citer également d'autres matériaux très divers tels que, par exemple, les articles tissés ou non tissés à base de cellulose ou de cellulose régénérée, de fibres naturelles, artificielles ou synthétiques comme le coton, l'acétate de cellulose, la laine, la soie, les fibres de polyamide, polyester, polyoléfine, polyuréthane ou polyacrylonitrile, le cuir, les matières plastiques, le verre, le bois, les métaux, la porcelaine, la maçonnerie, les surfaces peintes.

Dans le cas des papiers et cartons, les solutions des copolymères selon l'invention sont appliquées principalement en milieu aqueux, mais aussi éventuellement en milieu solvant ou dans un mélange d'eau et de solvants, suivant des techniques connues, par exemple, par enduction, imprégnation, immersion, pulvérisation, brossage, foulardage, couchage.

Sur papier et en solution aqueuse, les produits selon l'invention peuvent être appliqués soit superficiellement sur le support déjà terminé (de préférence à raison de 0,05 à 0,2% de fluor par rapport au poids de papier), soit dans la masse, c'est-à-dire dans la pâte à papier ou dans la pulpe (de préférence à raison de 0,2 à 0,4% de fluor par rapport au poids de pâte).

Les supports ainsi traités présentent de bonnes propriétés oléophobes et hydrophobes après un simple séchage à température ambiante ou à température plus élevée, suivi éventuellement d'un traitement thermique pouvant aller suivant la nature du support jusqu'à 250°C.

Pour obtenir une bonne fixation des copolymères selon l'invention sur les substrats sur lesquels ils sont appliqués et pour conférer en plus un effet particulier, il est parfois avantageux de les associer avec certains adjuvants, polymères, produits thermo-condensables et catalyseurs susceptibles de favoriser leur réticulation avec le support. Comme tels, on peut citer les condensats ou précondensats d'urée ou de mélamine formol, la méthylol-dihydroxyéthylène-urée -urée et ses dérivés, les urones, les méthylol-éthylène-urées, les méthylol-propylène-urées, les méthylol-triazones, les condensats de dicyandiamide-formol, les méthylol-carbamates, les méthylol-acrylamides ou méthacrylamides, leurs polymères ou copolymères, la divinylsulfone, les polyamides et leurs dérivés cationiques, les dérivés époxy comme le diglycidylglycérol, les halogénures d'époxypropyltrialkyl(aryl)ammonium comme le chlorure d'(époxy-2,3-propyl)triméthylammonium, le N-méthyl-N-(époxy-2,3-propyl)morpholinium chlorure, certains dérivés halogénés comme le chloro-époxy-propane et le dichloro-propanol, le sel de pyridinium de l'éther chlorométhylique de l'éthylèneglycol, les amidons cationiques, oxydés et amphotères.

Pour évaluer les performances des substrats traités selon l'invention, la demanderesse a utilisé les tests suivants:

- <u>Test d'ingraissabilité ou "kit value"</u>

  Ce test décrit dans Tappi, vol. 50, n° 10, pages 152 A et 153 A, norme RC 338 et UM 511, permet de mesurer l'ingraissabilité des substrats par des mélanges d'huile de ricin, de toluène et d'heptane. Ceux-ci contiennent des quantités variables de ces trois produits:

| Nombre Kit (Kit Value) | Volume d'huile de ricin | Volume de toluène | Volume d'heptane |
|---|---|---|---|
| 1 | 200 | 0 | 0 |
| 2 | 180 | 10 | 10 |
| 3 | 160 | 20 | 20 |
| 4 | 140 | 30 | 30 |
| 5 | 120 | 40 | 40 |
| 6 | 100 | 50 | 50 |
| 7 | 80 | 60 | 60 |
| 8 | 60 | 70 | 70 |
| 9 | 40 | 80 | 80 |
| 10 | 20 | 90 | 90 |
| 11 | 0 | 100 | 100 |
| 12 | 0 | 90 | 110 |

Le test consiste à déposer doucement sur le papier traité des gouttes de ces mélanges. On laisse les gouttes sur le papier durant 15 secondes, puis on observe soigneusement l'aspect des papiers ou cartons et on note le mouillage ou la pénétration mis en évidence par un brunissement de la surface. Le nombre correspondant au mélange contenant le pourcentage le plus élevé d'heptane, qui ne pénètre pas ou ne mouille pas le papier, est la "kit value" du papier et est considéré comme étant le taux d'oléophobie du papier traité. Plus la "kit value" est élevée, meilleure est l'oléophobie du papier.

- Test mesurant l'effet "barrière aux solvants"

Dans de l'essence de térébenthine anhydre et colorée par 0,5 g/l de Rouge Organol B S, on immerge de 1 cm, selon le sens de la longueur, une éprouvette rectangulaire (10 cm x 1 cm) du substrat à tester. Cette immersion se fait dans une cuve pour chromatographie fermée pendant une durée de 24 heures. On mesure ensuite en $mm^2$ la surface de la tache formée par la montée du liquide coloré sur la portion non immergée du substrat testé.

- Test mesurant l'effet "barrière à l'eau"

Dans de l'eau colorée par 0,5 g/l de RHODAMINE B, on immerge de 1 cm dans le sens de la longueur une éprouvette rectangulaire (10 cm x 1 cm) du substrat à tester. Cette immersion se fait dans une cuve pour chromatographie fermée pendant une durée de 24 heures. On mesure ensuite en $mm^2$ la surface de la tache formée par la montée du liquide coloré sur la portion non immergé du substrat testé.

- Test de COBB

Le test de COBB et LOWE (Tappi Standard T 441 codifié par le Comité des Essais du Laboratoire Central de l'Industrie Papetière Suédoise (Projet P.C.A. 13-59) consiste à mesurer le poids (en g) d'eau absorbée pendant une minute par un mètre carré de papier supportant une hauteur d'eau d'un centimètre;

- Test d'oléophobie

Sur certains supports, l'oléophobie a été mesurée suivant la méthode décrite dans "AATCC Technical Manual", Test Method 118 - 1972, qui évalue la non-mouillabilité du substrat par une série de liquides huileux dont les tensions superficielles sont de plus en plus faibles (Textil Research Journal, Mai 1969, page 451).

- Test de résistance à la pression hydrostatique

Ce test est décrit dans la norme française G 07-057 de 1966. L'essai consiste à soumettre une éprouvette, placée horizontalement au-dessus d'une cuve et la recouvrant, à une pression d'eau s'accroissant régulièrement sur la face inférieure du substrat à tester jusqu'à ce que le passage de l'eau se produise en trois points. On note la pression au moment où l'eau traverse le substrat au troisième point. Cette pression hydrostatique est une mesure de la résistance au passage de l'eau à travers le substrat.

- Test d'hydrophobie

L'effet hydrophobe est mesuré à l'aide de solutions-test numérotées de 1 à 10 et constituées par des mélanges eau/isopropanol dans les proportions pondérales suivantes:

| Solution-test | Eau | Isopropanol |
|---|---|---|
| 1 | 90 | 10 |
| 2 | 80 | 20 |
| 3 | 70 | 30 |
| 4 | 60 | 40 |

Suite du Tableau sur la page suivante

(suite)

| Solution-test | Eau | Isopropanol |
|---|---|---|
| 5 | 50 | 50 |
| 6 | 40 | 60 |
| 7 | 30 | 70 |
| 8 | 20 | 80 |
| 9 | 10 | 90 |
| 10 | 0 | 100 |

Le test consiste à déposer sur les substrats traités des gouttes de ces mélanges, puis à observer l'effet produit. On cote, en donnant pour valeur, le numéro correspondant à la solution qui contient le plus fort pourcentage d'isopropanol et qui n'a pas pénétré ou mouillé le substrat après 30 secondes de contact.

EXEMPLE 1

Dans un réacteur de 500 parties en volume, équipé d'un agitateur, d'un thermomètre, d'un réfrigérant à reflux, d'une ampoule de coulée, d'une arrivée d'azote et d'un dispositif de chauffage, on charge 90 parties de N-méthylpyrrolidone-2, 20 parties d'acétone, 16 parties de méthacrylate de diméthylaminoéthyle, 10 parties d'acétate de vinyle, 0,8 partie d'acide 4,4'-azobis(cyano-4-pentanoïque), 81,4 parties d'un mélange d'acrylates de sulfamido-alcool fluoré de formule:

$$CF_3(CF_2)_n-C_2H_4-SO_2-\overset{\displaystyle CH_3}{\overset{|}{N}}-C_2H_4-O\underset{\displaystyle O}{\underset{\|}{C}}CH=CH_2$$

où n est égal à 5, 7, 9, 11, 13 dans des rapports moyens et respectifs de 57/30/9/3/1.

On chauffe à 85°C sous atmosphère d'azote pendant 6 heures; puis on ajoute 8 parties d'acide acétique dans 150 parties d'eau. On maintient encore 1 heure à 75°C puis refroidit jusqu'à température ambiante.

On obtient ainsi 370 parties d'une solution ($S_1$) d'un copolymère selon l'invention, qui contient 27,9% de matières sèches et 9,75% de fluor.

EXEMPLE 2

On procède comme dans l'exemple 1, en remplaçant le méthacrylate de diméthylaminoéthyle par un poids identique de N-tertiobutylaminoéthyle.

On obtient ainsi 375 parties de solution ($S_2$) d'un copolymère selon l'invention, qui contient 27,3% de matières sèches de 9,5% de fluor.

EXEMPLE 3

3a) Dans le même appareillage que dans l'exemple 1 et avec le même mode opératoire, on copolymérise: 81,4 parties d'un mélange d'acrylates fluorés de formule:

$$CF_3(CF_2)_n-C_2H_4-O\underset{\displaystyle O}{\underset{\|}{C}}-CH=CH_2$$

où n est égal à 5, 7, 9, 11, 13 dans des rapports en poids moyens et respectifs de 1/63/25/9/3; 16 parties de méthacrylate de diméthylaminoéthyle, 10 parties d'acétate de vinyle dans 90 parties d'éther méthylique du propylèneglycol et 10 parties d'acétone, en présence de 0,8 partie d'acide 4-4'-azobis(cyano-4-pentanoïque). Après dilution comme à l'exemple 1, on obtient 370 parties d'une solution (S3) de copolymère qui contient 23% de matières sèches et 11% de fluor.

3b) Les copolymères obtenus aux exemples 1, 2 et 3a) sont testés dans le traitement du papier en size-press, à taux de fluor égal, comparativement aux produits suivants:

(A) copolymère à base de 85% de monomères polyfluorés tels que décrits dans l'exemple 1 et 15% de méthacrylate de diméthylaminoéthyle salifié et N-oxydé, préparé suivant l'exemple 1 du brevet US 4 147 851;

(B) copolymère à base de 70% du mélange de monomères polyfluorés tels que décrit dans l'exemple 1 et 30% de méthacrylate de diméthylaminoéthyle, salifié et N-oxydé, préparé suivant l'exemple 2 du brevet US 4 147 851;

(C) phosphate d'alcool polyfluoré de formule:

$$[CF_3-(CF_2)_7-SO_2-\underset{\displaystyle C_2H_5}{\underset{|}{N}}-C_2H_4-O]_2-\overset{\displaystyle O}{\overset{\|}{P}}-ONH_4$$

décrit dans l'exemple 5 du brevet français 1 317 427.

Ces produits sont appliqués sur un papier non collé dont la composition est la suivante:

- pâte KRAFT blanchie à base de feuillus et résineux (respectivement 60% et 40%) raffinée à 35°SR;
- adjuvants: talc (15%), agent de rétention, Retaminol E de la Société BAYER (3%).

Le grammage du papier est de 70 g/m$^2$.

Cinq bains contenant chacun 0,7 g de fluor par litre sont préparés. Leurs compositions sont réunies dans le tableau suivant:

| Constituants du bain (g/l) | Numéro du bain | | | | | |
|---|---|---|---|---|---|---|
| | 1 | 2 | 3 | 4 | 5 | 6 |
| . solution S1 de l'exemple 1 | 7,2 | | | | | |
| . solution S2 de l'exemple 2 | | 7,4 | | | | |
| . solution S3 de l'exemple 3a | | | 6,4 | | | |
| . solution du copolymère A à 16,6% de matière non volatile et 6,5% de fluor | | | | 10,8 | | |
| . solution du copolymère B à 15,3% de matière non volatile et 4,9% de fluor | | | | | 14,4 | |
| . solution du copolymère C à 35,7% de matière non volatile et 18,8% de fluor | | | | | | 3,8 |
| . eau | 992,8 | 992,6 | 993,6 | 989,2 | 985,6 | 996,2 |
| Total | 1 000 | 1 000 | 1 000 | 1 000 | 1 000 | 1 000 |

Cinq feuilles du papier sont traitées en size-press dans chacun des bains. Le taux d'enlevage est de l'ordre de 85%. Les feuilles sont séchées 1 minute et 30 secondes à 110°C. Leurs caractéristiques sont regroupées dans le tableau suivant et comparées avec celles d'un papier non traité.

| Caractéristiques | Papier traité avec le bain n° | | | | | | Papier non traité |
|---|---|---|---|---|---|---|---|
| | 1 | 2 | 3 | 4 | 5 | 6 | |
| . Oléophobie (kit-value) | 9 | 8/9 | 9 | 9 | 5 | 9 | 0 |
| . effet "barrière à l'eau", surface de la tache (en mm$^2$) | 55 | 70 | 90 | 207 | 477 | >700 | >700 |
| . effet "barrière aux solvants" surface de la tache (en mm$^2$) | 0 | 40 | 20 | 140 | 780 | 155 | >900 |

L'examen du tableau montre que les copolymères selon l'invention confèrent au papier des propriétés à la fois hydrophobes et oléophobes remarquables.

EXEMPLE 4

On procède comme à l'exemple 1, en remplaçant le mélange d'acrylate de sulfamido alcool fluoré par un mélange d'acrylates d'alcool fluoré de formule:

$$CF_3(CF_2)_nC_2H_4O\underset{\underset{O}{\|}}{C}-CH=CH_2$$

où n est égal à 5, 7, 9, 11, 13 dans des rapports en poids moyens et respectifs de 1/63/25/9/3.

On obtient 370 parties d'une solution (S4) de copolymère qui contient 25% de matières sèches et 12% de fluor.

4a) On prépare des bains pour size-press dans lesquels la concentration de S4 ou de C est variable (voir tableau ci-dessous).

| Constituants du bain (g/l) | Numéro du bain | | | | | | | |
|---|---|---|---|---|---|---|---|---|
| | 7 | 8 | 9 | 10 | 11 | 12 | 13 | 14 |
| . solution S4 | 6 | 8 | 10 | 12 | | | | |
| . solution du composé C à 35,7% de matière non volatile et 18,8% de fluor | | | | | 6 | 8 | 10 | 12 |
| . eau | 994 | 992 | 990 | 988 | 994 | 992 | 990 | 988 |
| Total | 1 000 | 1 000 | 1 000 | 1 000 | 1 000 | 1 000 | 1 000 | 1 000 |

La teneur en fluor des solutions aqueuses contenant C est systématiquement plus élevée que celle des solutions de S4 pour une concentration identique de C et S4. Par exemple, une solution à 6,0 g/l de produit correspond à une concentration en fluor de 1,1 g/l dans le cas de C et de 0,7 g/l dans le cas de S4.

Ces produits sont appliqués en size-press sur un papier composé de pâte KRAFT blanchie à base de feuillus, raffinée à 25°SR, de 66,2 g/m$^2$. Le taux d'enlevage est de l'ordre de 110%. Après séchage pendant une minute et 30 secondes à 110°C, puis cinq minutes à 90°C, sous vide, sur un appareil FRANK, les papiers ainsi traités et un papier non traité sont soumis aux tests du Cobb et d'oléophobie (kit-value). Les résultats sont regroupés dans le tableau suivant:

| <u>Caractéristiques</u> | Papier traité avec le bain n° | | | | | | | | <u>Papier non traité</u> |
|---|---|---|---|---|---|---|---|---|---|
| | <u>7</u> | <u>8</u> | <u>9</u> | <u>10</u> | <u>11</u> | <u>12</u> | <u>13</u> | <u>14</u> | |
| . valeur COBB (g/m$^2$) | 31 | 26 | 28 | 28 | 190 | 190 | 190 | 190 | 190 |
| . Oléophobie (kit-value) | 9 | 10 | 12 | 12 | 9 | 9 | 10 | 10 | 0 |

L'examen du tableau montre que les papiers traités avec les copolymères selon l'invention (bains n° 7 à 10) possèdent un excellent degré de collage et de très bonnes propriétés oléophobes.

4b) 20 g de pâte KRAFT blanchie à base de feuillus, raffinée à 25°SR, sont dispersés dans 2,4 1 d'eau pendant 45 minutes, le pH étant réglé à 6,5 par $H_2SO_4$. On ajoute alors sous agitation, dans cette dispersion:

- soit 0,5 g de la solution S4,
- soit 0,3 g de C additionné de 0,2 g d'un agent de rétention de la Société SANDOZ, la cartarétine.

La pâte aqueuse ainsi préparée contient 0,06 g de fluor. Une séparation de l'ensemble en neuf fractions de 270 g et une dilution de chacune avec 2,0 l d'eau, sous agitation, dans le bol d'un appareil FRANK permettent de réaliser neuf formettes de papier par filtration sous vide. Les formettes ainsi obtenues sont séchées sous vide pendant 5 minutes à 90°C sur les plaques de l'appareil FRANK. Les feuilles de papier traitées dans la masse ont les caractéristiques réunies dans le tableau suivant, comparativement à celles d'une feuille témoin non traitée.

| Caractéristiques | formette traitée par | | Formette non traitée |
|---|---|---|---|
| | S4 | C | |
| . oléophobie (kit-value) | 12 | 12 | 0 |
| . valeur COBB (g/m$^2$) | 25 | 190 | 190 |

Un examen du tableau montre que les papiers traités dans la masse avec le copolymère suivant l'invention (S4) présente un caractère antigraisse très élevé et un excellent degré de collage.

EXEMPLE 5

Dans le même appareillage que celui qui a été employé dans l'exemple 1, on charge 100 parties de N-méthylpyrrolidone, 14 parties de méthacrylate de N,N-diméthylaminoéthyle, 5 parties d'acétate de vinyle, 0,8 partie d'acide 4,4'-azobis(cyano-4-pentanoïque), 81,4 parties d'un mélange de monomères fluorés tel que décrit à l'exemple 4. On chauffe à 85°C sous atmosphère d'azote pendant 10 heures; puis on ajoute 8 parties d'acide acétique dans 160 parties d'eau, maintient le mélange 1 heure à 75°C puis refroidit jusqu'à température ambiante.

On obtient 360 parties de solution (S5) selon l'invention qui contient 23,5% de matières sèches et 12% de fluor. Cette solution (S5) ne présente pas de point d'éclair entre 0 et 100°C selon la norme ASTM D3828.

5a/ Appliqué dans les mêmes conditions qu'à l'exemple 4b, mais à raison de 0,6 g, le copolymère (S5) confère au papier les caractéristiques suivantes:

. oléophobie (kit-value) 11
. valeur de Cobb 43 g/$m^2$

5b/ On prépare un bain pour size-press dans lequel la concentration de S5 est de 8 g/l.

Appliqué dans les mêmes conditions que dans l'exemple 4a, ce copolymère confère au papier les caractéristiques suivantes:

. oléophobie (kit-value) 10
. valeur de Cobb 30 g/$m^2$

EXEMPLE 6

On procède comme avec l'exemple 1, avec les charges suivantes: 90 parties de N-méthylpyrrolidone, 15 parties de méthacrylate dé N-tertiobutylaminoéthyle, 7,5 parties d'acétate de vinyle, 20 parties d'acétone, 0,8 partie d'acide 4,4'-azobis(cyano-4-pentanoïque) et 81,4 parties d'un mélange de monomères fluorés, tel que décrit à l'exemple 4. La polymérisation ainsi que la dilution sont réalisés comme à l'exemple 4.

On obtient 355 parties de solution (S6) qui contient 24% de matière sèche et 11,9% de fluor.

6a/ Appliqué dans les mêmes conditions et proportions qu'à l'exemple 5a, ce copolymère confère au papier les caractéristiques suivantes:

. oléophobie (kit-value) 12
. valeur de Cobb 21 g/$m^2$

6b/ On prépare un bain pour size-press dans lequel la concentration de (S6) est de 8 g/l.

Appliqué dans les mêmes conditions que dans l'exemple 3b, ce copolymère confère au papier les caractéristiques suivantes:

. oléophobie (kit-value) 11
. effet "barrière à l'eau", surface de la tache 120 $mm^2$
. effet "barrière aux solvants", surface de la tache 0

EXEMPLE 7

On procède comme à l'exemple 4, en remplaçant la N-méthylpyrrolidone par la quantité équivalente d'isopropanol. On obtient 360 parties de solution (S7) qui contient 25% d'extrait sec et 12% de fluor. Alors que la solution (S4) synthétisée dans la N-méthylpyrrolidone est homogène, la solution (S7) est trouble et présente une tendance à la décantation.

On prépare des bains pour size-press dans lesquels la concentration de (S7) ou de (S4) est de 8 g/l. Appliqués dans les mêmes conditions que dans l'exemple 3b, ces copolymères confèrent au papier les caractéristiques regroupées dans le tableau suivant:

| Caractéristiques | Papier traité par | |
|---|---|---|
| | S4 | S7 |
| . oléophobie (kit value) | 12 | 8 |
| . effet "barrière à l'eau" surface de la tache en $mm^2$ | 100 | 270 |
| . effet "barrière aux solvants" surface de la tache en $mm^2$ | 0 | 0 |

On constate que l'utilisation de N-méthylpyrrolidone comme solvant de polymérisation en remplacement de l'isopropanol conduit non seulement à une solution parfaitement limpide et stable, mais également améliore de façon spectaculaire les propriétés applicatives du produit final.

EXEMPLE 8

On procède comme à l'exemple 5 avec les charges suivantes: 100 parties de N-méthylpyrrolidone, 16 parties de méthacrylate de N,N-diméthylaminoéthyle, 3 parties d'acétate de vinyle, 7 parties de méthacrylate de butyle, 0,8 partie d'acide 4,4'-azobis(cyano-4-pentanoïque) et 81,4 parties du mélange de monomères fluorés tel que décrit à l'exemple 4.

On obtient 355 parties de solution (S8) qui contient 26,9% d'extrait sec et 13% de fluor.

On prépare un bain pour size-press dans lequel la concentration de (S8) est de 7,5 g/l. Appliqué dans les mêmes conditions qu'à l'exemple 3b, ce copolymère confère au papier les caractéristiques suivantes:

. oléophobie (kit-value) 10
. effet "barrière à l'eau", surface de la tache 70 $mm^2$
. effet "barrière aux solvants", surface de la tache 0

EXEMPLE 9

On procède comme à l'exemple 6 avec les charges suivantes: 90 parties de N-méthylpyrrolidone, 14 parties de méthacrylate de N,N-diméthylaminoéthyle, 3 parties d'acétate de vinyle, 20 parties d'acétone, 0,8 partie d'acide 4,4'-azobis(cyano-4-pentanoïque) et 81,4 parties d'un mélange de monomères fluorés, tel que décrit à l'exemple 4.

La polymérisation ainsi que la dilution sont réalisés comme à l'exemple 4.

On obtient 340 parties d'une solution (S9) qui contient 24% de matières sèches et 12,6% de fluor.

Dans un bain de foulardage composé de 20 parties de la solution (S9) et 980 parties d'eau, on foularde un non-tissé de polypropylène avec un taux d'exprimage de 138%, puis on sèche pendant 3 minutes à 120°C dans un thermocondenseur BENZ.

Le tableau suivant regroupe les caractéristiques du non-tissé ainsi traité en comparaison avec celles d'un non-tissé témoin non traité.

| Caractéristique | Non-tissé polypropylène | |
|---|---|---|
| | traité | non traité |
| . hydrophobie (test eau/IPA) | 3 | 1 |
| . résistance à la pression hydrostatique NF G07-057-(1966) (cm d'eau) | 32 | 20 |

EXEMPLE 10

Dans les mêmes conditions qu'à l'exemple 1, on copolymérise 16 parties de méthacrylate de N,N-diméthylaminoéthyle, 3 parties d'acétate de vinyle, 81,4 parties d'un mélange de monomères fluorés tel que décrit à l'exemple 4, dans 90 parties de N-méthylpyrrolidone et 20 parties d'acétone, en présence de 0,8 partie d'acide 4,4'-azobis(cyano-4-pentanoïque).

Après dilution par 8 parties d'acide acétique dans 135 parties d'eau, on obtient 355 parties de solution (S10) de polymère selon l'invention, qui contient 24,4% de matière sèche et 12,6% de fluor.

La solution S10 est utilisée pour le traitement des cuirs en foulon. On procède de la façon suivante.

Un cuir de veau sur stain est, dans un premier temps, retanné, teint et traité selon le procédé suivant, bien connu des gens de l'art:

- remouillage:

. eau à 40°C 1 000%
. ammoniaque 2%
rotation 60 minutes

- rinçage:

. eau à 40°C 1 000%
rotation 10 minutes

- retannage:

. eau à 40°C 1 000%
. agent de retannage CHROMITAN B de la Société BASF 10%
rotation 90 minutes

- rinçage:

. eau à 40°C 1 000%
rotation 10 minutes

- teinture-nourriture:

. eau à 50°C 1 000%
. ammoniaque 1%
rotation 5 minutes
. agent de teinture BLEU LUGANIL NL de la Société BASF 4%
rotation 60 minutes
. huile de nourriture DERMINOL-Licker EMP de la Sté HOECHST 6%
rotation 60 minutes
. acide formique 2%
rotation 15 minutes
. acide formique 2%
rotation 15 minutes
pH ≒ 3,4

Les pourcentages sont donnés par rapport au poids de cuir.

Le traitement d'imperméabilisation à l'eau et à l'huile est ensuite effectué dans les conditions suivantes:

. eau à 40°C 500%
. solution S10 6%
rotation 30 minutes

- rinçage:

. eau à 20°C 1 000%
rotation 5 minutes

Les caractéristiques du cuir ainsi traité sont fournies dans le tableau suivant en comparaison avec celles d'un cuir témoin non traité.

| Caractéristiques | Veau sur stain | |
|---|---|---|
| | traité | non traité |
| . hydrophobie (test eau/IPA) | 3 | 0 |
| . oléophobie norme AATCC 118-(1972) | 4 | 0 |

## Revendications

**1.** Copolymères fluorés, éventuellement salifiés ou quaternisés, consistant en, en poids:

(a) 92 à 50% d'un ou plusieurs monomères polyfluorés de formule générale:

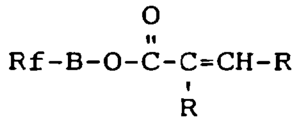 (I)

dans laquelle:

Rf représente un radical perfluoré à chaîne droite ou ramifiée, contenant 2 à 20 atomes de carbone, de préférence 4 à 16 atomes de carbone;
B représente un enchaînement bivalent lié à O par un atome de carbone et pouvant comporter un ou plusieurs atomes d'oxygène, de soufre et/ou d'azote, l'un des symboles R représentant un atome d'hydrogène et l'autre un atome d'hydrogène ou un radical alkyle contenant 1 à 4 atomes de carbone;

(b) 1 à 25% d'un ou plusieurs monomères de formule générale:

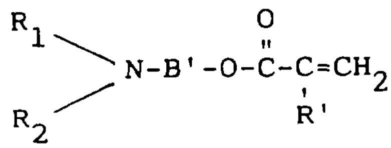 (II)

dans laquelle:

B' représente un radical alkylène linéaire ou ramifié, contenant 1 à 4 atomes de carbone,
R' représente un atome d'hydrogène ou un radical alkyle contenant 1 à 4 atomes de carbone;
$R_1$ et $R_2$, identiques ou différents, représentent chacun un atome d'hydrogène ou un radical alkyle linéaire ou ramifié, contenant 1 à 18 atomes de carbone, hydroxyéthyle ou benzyle ou $R_1$ et $R_2$ ensemble avec l'atome d'azote auquel ils sont liés forment un radical morpholino, pipéridino ou pyrrolidinyle-1;

(c) 1 à 25% d'un dérivé vinylique de formule générale:

$$R''-CH=CH_2 \qquad (III)$$

dans laquelle:
R" peut être un groupement alkylcarboxylate ou alkyléther contenant de 1 à 18 atomes de carbone;
(d) 0 à 10% d'un monomère quelconque autre que les monomères de formules I, II, III, à l'exclusion du monomère

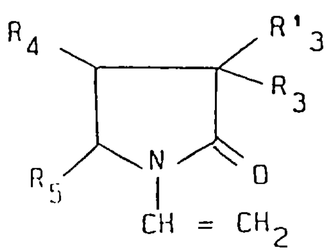

dans laquelle $R_3$, $R'_3$, $R_4$ et $R_5$ sont identiques ou différents et représentent chacun un atome d'hydrogène ou un radical alkyle contenant 1 à 4 atomes de carbone.

**2.** Copolymères fluorés selon la revendication 1, consistant en poids 90 à 70% de monomère(s) polyfluoré(s) de formule (I), 8 à 18% de monomère(s) de formule (II), 2 à 10% de monomère(s) de formule (III) et de 0 à 8% d'un autre monomètre (d).

3. Copolymères fluorés selon la revendication 1 ou 2, dans lesquels le ou les monomère(s) polyfluoré(s) sont préparés par estérification au moyen d'un acide alcène monocarboxylique de formule:

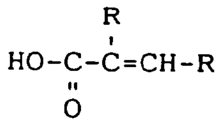

d'un alcool polyfluoré choisi dans le groupe consistant en les alcools de formules:

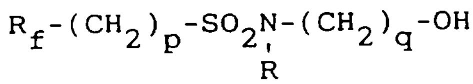 (VI-1)

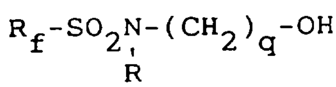 (VI-2)

$$R_f\text{-}(CH_2)_p\text{-}OH \quad (VI\text{-}3)$$

$$R_f\text{-}(CH_2)_p\text{-}O\text{-}(CH_2)_q\text{-}OH \quad (VI\text{-}4)$$

$$R_f\text{-}(CH_2)_p\text{-}S\text{-}(CH_2)_q\text{-}OH \quad (VI\text{-}5)$$

$$R_f\text{-}(CH_2)_p\text{-}(OCH_2CH_2)_q\text{-}OH \quad (VI\text{-}6)$$

$$R_f\text{-}(CH_2)_p\text{-}SO_2\text{-}(CH_2)_q\text{-}OH \quad (VI\text{-}7)$$

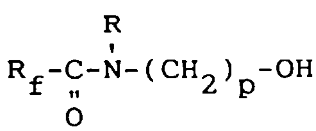 (VI-8)

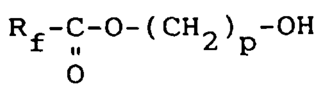 (VI-9)

$$R_f\text{-}CH{=}CH\text{-}(CH_2)_p\text{-}OH \quad (VI\text{-}10)$$

dans lesquelles $R_f$ et R ont les mêmes significations que cidessus, les symboles p et q, identiques ou différents, représentent chacun un nombre entier allant de 1 à 20 et, de préférence, égal de 2 à 4.

4. Copolymères fluorés selon la revendication 3, obtenus à partir d'un mélange de monomères de formule (VI.1) à (VI.10) présentant des radicaux $R_f$ différents.

5. Copolymères fluorés selon l'une quelconque des revendications 1 à 4, dans lesquels le monomère de formule (II) est le méthacrylate de diméthylaminoéthyle ou le méthacrylate de N-tertiobutylaminoéthyle.

6. Copolymères fluorés selon l'une quelconque des revendications 1 à 5, dans lesquels le monomère de formule (III) est l'acétate de vinyle.

7. Copolymères fluorés selon l'une quelconque des revendications 1 à 6, dans lesquels le solvant de copolymérisation est le N-méthylpyrrolidone, ou ses mélanges, de préférence avec l'acétone.

8. L'application des copolymères selon l'une des revendications 1 à 7, à l'oléofugation et à l'hydrofugation de substrats

divers, en particulier des papiers, cartons et articles similaires.

**9.** Les matériaux et articles traités au moyen d'un copolymère selon l'une des revendications 1 à 7.

**Patentansprüche**

**1.** Fluorierte Copolymere, gegebenenfalls in Form ihrer Salze oder in quaternisierter Form, bestehend aus (Angaben in Gewichtsprozent):

(a) 92 bis 50 Gew.-% eines oder mehrerer polyfluorierter Monomere der allgemeinen Formel

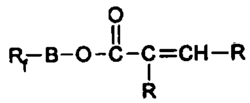

(I)

in der

$R_f$ einen perfluorierten, geradlinigen oder verzweigten Rest darstellt, der 2 bis 20 Kohlenstoffatome, vorzugsweise 4 bis 16 Kohlenstoffatome, enthält;
B eine bivalente Verknüpfung darstellt, die über ein Kohlenstoffatom an O gebunden ist und ein oder mehrere Sauerstoff-, Schwefel- und/oder Stickstoffatome enthalten kann, wobei eines der Symbole R ein Wasserstoffatom und das andere ein Wasserstoffatom oder einen Alkylrest mit 1 bis 4 Kohlenstoffatomen darstellt;

(b) 1 bis 25 Gew.-% eines oder mehrerer Monomere der allgemeinen Formel

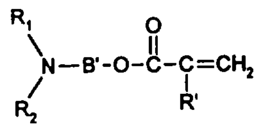

(II)

in der

B' einen linearen oder verzweigten Alkylenrest mit 1 bis 4 Kohlenstoffatomen darstellt;
R' ein Wasserstoffatom oder ein Alkylradikal mit 1 bis 4 Kohlenstoffatomen darstellt;
$R_1$ und $R_2$, identisch oder verschieden, jeweils ein Wasserstoffatom, einen linearen oder verzweigten Alkylrest mit 1 bis 18 Kohlenstoffatomen, einen Hydroxyethylrest oder einen Benzylrest darstellen oder $R_1$ und $R_2$ zusammen mit dem Stickstoffatom, an das sie gebunden sind, einen Morpholin-, Piperidin- oder Pyrrolidin-1-yl-Rest darstellen;

(c) 1 bis 25 Gew.-% eines Vinylderivates der allgemeinen Formel

$$R''\text{-}CH{=}CH_2 \quad \text{(III)}$$

in der
R" eine Alkylcarboxylat- oder Alkylethergruppierung mit 1 bis 18 Kohlenstoffatomen sein kann;

(d) 0 bis 10 Gew.-% eines beliebigen, von den Formeln (I), (II) oder (III) unterschiedlichen Monomeren, mit Ausnahme des Monomeren der allgemeinen Formel

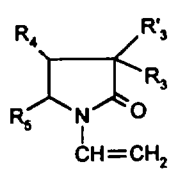

in der $R_3$, $R'_3$, $R_4$ und $R_5$, identisch oder verschieden, jeweils ein Wasserstoffatom oder einen Alkylrest mit 1 bis 4 Kohlenstoffatomen darstellen.

2. Fluorierte Copolymere nach Anspruch 1, bestehend aus 90 bis 70 Gew.-% eines oder mehrerer polyfluorierte Monomerer der Formel (I), 8 bis 18 Gew.-% eines oder mehrerer Monomerer der Formel (II), 2 bis 10 Gew.-% eines oder mehrerer Monomerer der Formel (III) und 0 bis 8 Gew.-% eines weiteren Monomeren (d).

3. Fluorierte Copolymere nach Anspruch 1 oder 2, in denen das oder die polyfluorierten Monomere hergestellt ist/sind durch Veresterung einer α,β-ungesättigten Monocarbonsäure der Formel

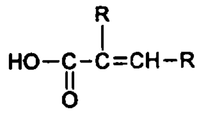

mit einem polyfluorierten Alkohol, ausgewählt aus der Gruppe der Alkohole mit den Formeln

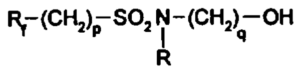 (VI-1)

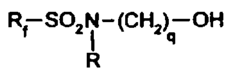 (VI-2)

$$R_f\text{-}(CH_2)_p\text{-}OH \qquad (VI\text{-}3)$$

$$R_f\text{-}(CH_2)_p\text{-}O\text{-}(CH_2)_q\text{-}OH \qquad (VI\text{-}4)$$

$$R_f\text{-}(CH_2)_p\text{-}S\text{-}(CH_2)_q\text{-}OH \qquad (VI\text{-}5)$$

$$R_f\text{-}(CH_2)_p\text{-}(OCH_2CH_2)_q\text{-}OH \qquad (VI\text{-}6)$$

$$R_f\text{-}(CH_2)_p\text{-}SO_2\text{-}(CH_2)_q\text{-}OH \qquad (VI\text{-}7)$$

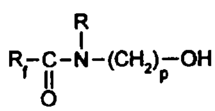 (VI-8)

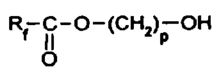 (VI-9)

$$R_f\text{-}CH{=}CH\text{-}(CH_2)_p\text{-}OH \qquad (VI\text{-}10)$$

in denen $R_f$ und R dieselbe Bedeutung haben, wie zuvor genannt, und die Symbole p und q, identisch oder verschieden, jeweils eine ganze Zahl von 1 bis 20, vorzugsweise von 2 bis 4, darstellen.

4. Fluorierte Copolymere nach Anspruch 3, erhalten aus einer Mischung von Monomeren der Formeln (VI-1) bis (VI-10) mit unterschiedlichen $R_f$-Resten.

5. Fluorierte Copolymere nach einem der Ansprüche 1 bis 4, in denen das Monomere der Formel (II) Dimethylaminoethylmethacrylat oder N-tertio-Butylaminoethylmethacrylat ist.

6. Fluorierte Copolymere nach einem der Ansprüche 1 bis 5, in denen das Monomer der Formel (III) Vinylacetat ist.

7. Fluorierte Copolymere nach einem der Ansprüche 1 bis 6, in denen das Copolymerisationslösemittel N-Methylpyrrolidon oder dessen Mischungen, vorzugsweise mit Aceton, ist.

8. Verwendung der Copolymere nach einem der Ansprüche 1 bis 7 zur Oleo- oder Hydrophobierung beliebiger Substrate, insbesondere von Papieren, Pappen und ähnlichen Artikeln.

**9.** Materialien und Artikel, behandelt mittels eines Copolymeren nach einem der Ansprüche 1 bis 7.

## Claims

**1.** Fluorine-containing copolymers, optionally in salt or quaternized form, comprising by weight:

(a) 92 to 50% of one or several polyfluorinated monomers of general formula:

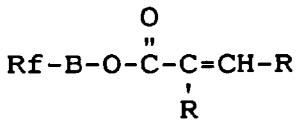 (I)

in which:

| | |
|---|---|
| Rf | is a straight chain or branched perfluorinated radical, having 2 to 20 and preferably 4 to 16 carbon atoms; |
| B | is a bivalent bridge linked to O by a carbon atom and being able to include one or several oxygen, sulfur and/or nitrogen atoms; |
| one symbol R | representing a hydrogen atom and the other symbol R being a hydrogen atom or an alkyl radical having 1 to 4 carbon atoms; |

(b) 1 to 25% of one or several monomers of general formula:

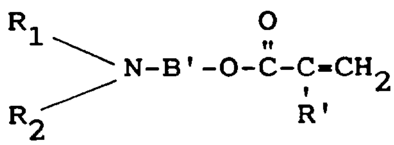 (II)

in which:

| | |
|---|---|
| B' | is a straight or branched chain alkylene radical having 1 to 4 carbon atoms, |
| R' | is a hydrogen atom or an alkyl radical having 1 to 4 carbon atoms; |
| $R_1$ and $R_2$, | which can be the same or different, each represent a hydrogen atom or a linear or branched alkyl radical containing 1 to 18 carbon atoms, hydroxyethyl or benzyl, or $R_1$ and $R_2$ together with the nitrogen atom to which they are bound form a morpholino, piperidino or pyrrolidinyl-1 radical; |

(c) 1 to 25% of a vinylic derivative of general formula:

$$R''-CH=CH_2 \qquad (III)$$

in which:

R" can be an alkylcarboxylate or alkylether group containing 1 to 18 carbon atoms;

(d) 0 to 10% of any monomer other than monomers of formulae I, II, III, excluding the monomer

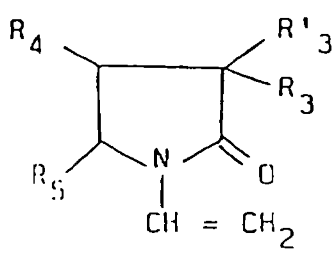

in which $R_3$, $R'_3$, $R_4$, and $R_5$, are identical or different and each represent a hydrogen atom or an alkyl radical containing 1 to 4 carbon atoms.

2. Fluorine-containing copolymers according to claim 1, comprising, by weight, 90 to 70% of polyfluorinated monomer or monomers of formula (I), 8 to 18% of monomer(s) of formula (II), 2 to 10% of monomer(s) of formula (III) and from 0 to 8% of another monomer (d).

3. Fluorine-containing copolymers according to claim 1 or 2, in which the polyfluorinated monomer or monomers are prepared by esterification by means of a monocarboxylic alkene acid of formula:

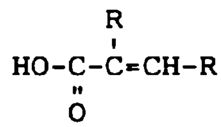

of a polyfluorinated alcohol selected from the group consisting of alcohols of formulae:

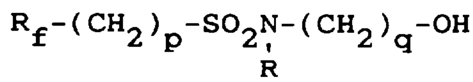 (VI-1)

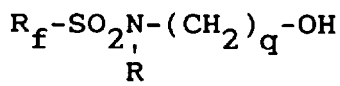 (VI-2)

$R_f$-$(CH_2)_p$-OH (VI-3)

$R_f$-$(CH_2)_p$-O-$(CH_2)_q$-OH 2(VI-4)

$R_f$-$(CH_2)_p$-S-$(CH_2)_q$-OH (VI-5)

$R_f$-$(CH_2)_p$-$(OCH_2CH_2)_q$-OH (VI-6)

$R_f$-$(CH_2)_p$-$SO_2$-$(CH_2)_q$-OH (VI-7)

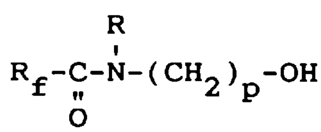 (VI-8)

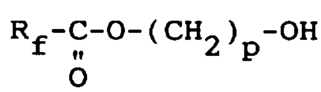 (VI-9)

$R_f$-CH=CH-$(CH_2)_p$-OH (VI-10)

in which $R_f$ and R have the same meaning as in claim 1, the symbols p and q, which can be the same or different, each represent a whole number ranging from 1 to 20, and preferably are equal to 2 to 4.

4. Fluorine-containing copolymers according to claim 3 obtained starting from a mixture of monomers of formulae (VI.1) to (VI.10) having differing $R_f$ radicals.

5. Fluorine-containing copolymers according to one of claims 1 to 4, wherein the monomer of formula (II) is dimethylaminoethyl methacrylate or N-tertiobutylaminoethyl methacrylate.

6. Fluorine-containing copolymers according to one of claims 1 to 5, wherein the monomer de formula (III) is vinyl acetate.

7. Fluorine-containing copolymers according to one of claims 1 to 6, wherein the copolymerisation solvent is N-methylpyrrolidone, or mixtures thereof, preferably with acetone.

8. The application of copolymers according to one of claims 1 to 7 for imparting oil- and water-repelling properties to various substrates, particularly paper, cardboard and similar articles.

9. Materials and articles treated by means of a copolymer according to one of claims 1 to 7.